Europäisches Patentamt

European Patent Office

Office européen des brevets

(11) Publication number:

**0 343 869**
**A2**

## EUROPEAN PATENT APPLICATION

(21) Application number: 89305089.8

(22) Date of filing: 19.05.89

(51) Int. Cl.4: **B60S 1/38**

(30) Priority: 23.05.88 JP 123860/88

(43) Date of publication of application:
**29.11.89 Bulletin 89/48**

(84) Designated Contracting States:
**DE FR GB**

(71) Applicant: **Nippon Wiperblade Co., Ltd.**
**998, Oaza Kamiochiai**
**Yono-shi Saitama-ken 338(JP)**

(72) Inventor: **Arai, Masaru c/o Nippon Wiperblade**
**Co.Ltd.**
**998 Oaza Kamiochiai**
**Yono-Shi Saitama-Ken 338(JP)**
Inventor: **Saita, Itsuro c/o Nippon Wiperblade**
**Co.Ltd.**
**998 Oaza Kamiochiai**
**Yono-Shi Saitama-Ken 338(JP)**

(74) Representative: **Spall, Christopher John et al**
**BARKER, BRETTELL & DUNCAN 138 Hagley**
**Road**
**Edgbaston Birmingham B16 9PW(GB)**

(54) Windshield wiper.

(57) A wiperblade of a windshield wiper of the type including a primary yoke (1) connected to a wiper arm and at least one secondary yoke (2) connected to the primary yoke. Each of the primary and secondary yokes has a generally inverted U-shape cross section including one top wall and two side walls and, at least one side wall and the top wall of the secondary yoke are located at least partially inside the space defined by the top wall and the side walls of the primary yoke in the region wherein the yokes are overlappingly disposed during the usage of the wiper.

FIG. 2

FIG. 1

## WINDSHIELD WIPER

### Field of the Invention

This invention relates to a windshield wiper for use in a vehicle such as an automobile and, particularly, to a windshield wiper which enables to prevent the decrease in the processing force of the wiper when the vehicle runs at a high speed.

### Description of Prior Art

It has been recognized that the pressing force of the windshield wiper sometimes decreases excessively such that the wiperblade of the wiper is lifted from the surface of the windshield being wiped by the wiper through the aerodynamic force acting on the wiper, when the vehicle runs at a high speed, whereby a striped pattern may be observed on the surface of the windshield.

Various proposals have been made and utilized against such problems, and some of them include the types of blades which receive the air stream to augment the pressing force. In Japanese Patent Publication 54-12689(1979), a yoke of the wiperblade is formed a generally inverted L-shape, as compared with generally inverted U-shape of a conventional wiperblade, so that the air stream acting on the lower surface of the yoke will smoothly flow through the wiperblade and the upward force does not act on the lower surface of the yoke.

However, such a proposal is effective for preventing the force acting on a specified yoke and in the upward direction, but is not effective when the wiperblade has plurality of mutually overlapping yokes. Because the air stream flowing on the upper (remote from the surface of the windshield) surface of the lower (near to the surface of the windshield) yoke may flow against the inner surface of the upper yoke, thereby which causes the force acting on the wiperblade in the upper direction. Thus, the characteristics in a high speed condition are impeded.

The present invention has been made with respect to the circumstances aforementioned, and the object of the present invention is to provide a wiper device for preventing the decrease in the pressing force of the wiperblade on the windshield during the high speed condition of the vehicle thereby preventing the striped pattern on the windshield.

### Summary of the Invention

According to the invention, there is provided a wiperblade of a windshield wiper including a primary yoke connected to a wiper arm and at least one secondary yoke connected to the primary yoke, wherein each yoke has a generally inverted U-shape cross section including one top wall and two side walls and at least one of two side walls and one top wall of the lower yoke or the secondary yoke are located at least partially in the space defined by the top wall and the side walls of the upper yoke or the primary yoke in the region wherein the yokes are overlapped in use.

Since at least one side wall of the lower yoke is located in the space defined by the upper yoke in usage of the wiper, thus, the air stream does not lash against the inner surface of the upper yoke, and the decrease in the pressing force can effectively be prevented.

### Brief Description of the Drawings

Further objects and effects of the present invention will become apparent from the following detailed description in conjunction with the drawings, in which:

Fig. 1 is a partial side view of a wiperblade according to a first embodiment of the present invention;

Fig. 2 is a sectional drawing viewed along line B-B in Fig. 1;

Fig. 3 is a sectional view similar to Fig.2 and showing a modified form;

Fig. 4 is a sectional view similar to Fig.2 and showing a further modified form;

Fig. 5 is a view similar to Fig.1 and showing a prior art, and

Fig. 6 is a sectional drawing viewed along line A-A in Fig.5.

### Detailed Description of Preferred Embodiments

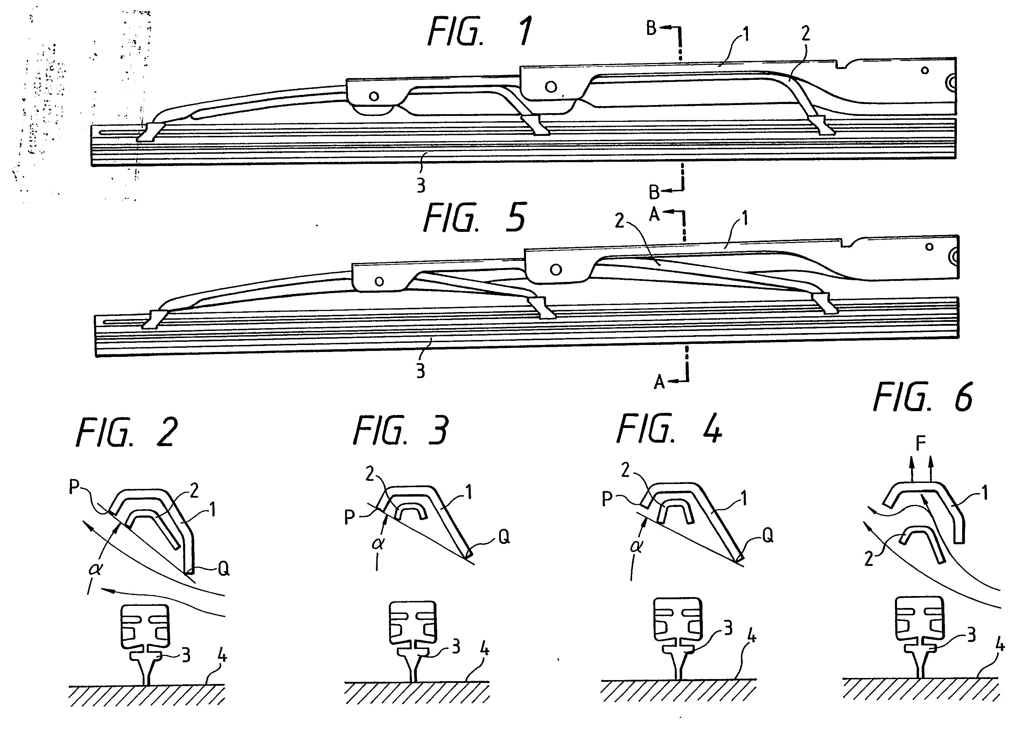

The wiperblade shown in Figs.5 and 6 comprises an upper yoke 1 and a lower yoke 2 which are overlappingly disposed during the usage of the wiper. This is the type of the wiperblade that the upper yoke 1, the lower yoke 2 and a blade rubber 3 are generally aligned in the vertical direction or in the orthogonal direction with respect to the surface of a windshield 4.

As shown in Fig.6, during the usage of the wiper, a part of the air stream enters the region between the upper yoke 1 and the lower yoke 2, which is lashed against the inner or the lower surface of the top wall of the upper yoke 1 and causes substantial lift force F, particularly when the vehicle runs at a high speed, as shown with arrow lines in Fig.6.

The type of the wiperblade shown in Figs.5 and 6 is disclosed in Japanese Patent Publication 54-12689(1979), wherein the side wall of the outflow side of the air stream is smaller than that of the inflow side so that excessive side force is not generated at the yokes of the wiperblade.

In the first embodiment shown in Figs.1 and 2, the lower yoke 2 is located inside the region defined by the top wall and the both side walls of the upper yoke 1 or above the line PQ which is connected between the lower ends P and Q of the respective side walls of the upper yoke 1. Thus, the air stream (shown with arrow lines) flowing between the blade rubber 3 and the yoke does not enter between the upper yoke 1 and the lower yoke 2 and does not act on the inner surface of the upper yoke 1 so that the lift F shown in Fig.6 does not generate. It is preferable that the line PQ is inclined upward in the downstream direction as shown in Fig.2, and the angle $\alpha$ is preferably 30 ~ 60 degrees with respect to the surface of the windshield.

In the embodiment shown in Fig.3, the side wall of the upper yoke 1 of the upstream side extends along a straight line inclined downward and forward (upstream direction) so that the air stream acting on the yoke generates a downward force.

In the embodiment shown in Fig.4, one of the side walls of the lower yoke projects from the line PQ, but the air stream does not substantially enter between the upper yoke 1 and the lower yoke 2, thus the lift force does not substantially act on the upper yoke. Preferably, the side wall of the lower yoke projecting out of the line PQ is at the outflow side.

According to the invention, at least one side wall of the lower yoke is located inside the space defined by the upper yoke, the air stream almost does not flow between the upper yoke and the lower yoke during the usage of the wiper, thus, the upper yoke does not receive any lift force aerodynamically, thus, it is possible to prevent substantially the blade rubber from lifting up on the windshield or the excessive decrease in the pressing force. Since the aerodynamic force acting on the wiper laterally direction and upward direction can be reduced, the lift force acting on the wiper can be reduced and the durability of the blade rubber is improved. By arranging the upper yoke and the lower yoke overlapping each other, the height of the yoke assembly can be reduced, which improves the field of view of the driver of the vehicle.

It will be understood that the invention is not limited to the embodiments shown in the drawings, and various changes or modifications may easily be applied for those skilled in the art within the scope of the present invention which is defined by the claims.

## Claims

1. A wiperblade of a windshield wiper including a primary yoke connected to a wiper arm and at least one secondary yoke connected to the primary yoke, wherein each yoke has a generally inverted U-shape cross section including one top wall and two side walls and at least one of two side walls and one top wall of the lower yoke or the secondary yoke are located at least partially in the space defined by the top wall and the side walls of the upper yoke or the primary yoke in the region wherein the yokes are overlapped in use.

2. A wiperblade according to claim 1, wherein one of the side walls of the upper yoke is longer than the other.

3. A wiperblade according to claim 2, wherein the longer wall is at the inflow side or the upstream side.

4. A wiperblade according to claim 3, wherein the longer wall is inclined downward and upstream direction with respect to the air stream acting on the wiper.

5. A wiperblade according to claim 2, wherein the straight line connecting the lower ends of the side walls of the upper yoke is inclined with respect to the surface of the windshield by an angle of 30 ~ 60 degrees.

FIG. 1

FIG. 5

FIG. 2

FIG. 3

FIG. 4

FIG. 6

EP 0 343 869 A2